# FASCICULE DE BREVET EUROPEEN

(11) **EP 0 351 288 B1**
(45) Date de publication et mention de la délivrance du brevet: **11.05.1994**
(21) Numéro de dépôt: 89401933.0
(22) Date de dépôt: 06.07.1989
(51) Int. Cl.: B32B 17/10, C03C 27/12

(54) **Dispositif pour l'assemblage des vitrages feuilletés**
Vorrichtung zum Verbinden von Schichtglas
Apparatus for assembling laminated glass

(30) Priorité: 12.07.1988 FR 8809498
(43) Date de publication de la demande: 17.01.1990
(73) Titulaire: SAINT-GOBAIN VITRAGE INTERNATIONAL, 92400 Courbevoie (FR)
(72) Inventeur: Triffaux, Francis, F-60150 Thourotte (FR); Moncheaux, Michel, F-60200 Compiègne (FR)
(74) Mandataire: Muller, René

(56) Documents cités:
- DE-A- 2 202 771
- US-A- 3 054 344

## Description

La présente invention concerne la fabrication des vitrages feuilletés et en particulier un dispositif pour l'assemblage des éléments constitutifs d'un vitrage feuilleté par pressage notamment par calandrage, c'est-à-dire dans ce cas, par passage de l'empilage désigné par la suite aussi par vitrage, entre des moyens supérieurs et des moyens inférieurs de pressage.

Les dispositifs connus de calandrage, décrits par exemple dans la publication de brevet français 2 053 104, sont généralement équipés de deux séries de galets ou rouleaux de pressage : une série de rouleaux inférieurs disposés les uns à coté des autres, leur position pouvant être réglée indépendemment de façon à obtenir une courbure correspondant à la courbure transversale désirée qui est généralement la courbure moyenne du vitrage, et une série de rouleaux supérieurs disposés sensiblement de la même façon. Dans les dispositifs connus, les deux séries de rouleaux sont montées chacune sur une poutre transversale appartenant à un cadre pouvant pivoter autour d'un axe horizontal, l'ensemble constituant un équipage mobile, de sorte que les rouleaux restent sensiblement perpendiculaires au vitrage durant toute l'opération d'assemblage. Le réglage de la position des rouleaux de pressage peut s'effectuer par le biais de leur système de montage sur la poutre transversale. Ce réglage est délicat et long parce que ces dispositifs sont équipés d'un grand nombre de galets de pressage, généralement entre 30 et 40. Ces galets doivent être réglés en hauteur et en inclinaison, individuellement ou par paires les uns par rapport aux autres.

Ces dispositifs conviennent généralement pour l'assemblage des vitrages à double bombage lorsque ce double bombage n'est pas très accentuée et lorsque le bombage transversal du vitrage est régulier et sensiblement le même sur toute la longueur du vitrage. Mais pour des vitrages à formes plus complexes, notamment pour des vitrages présentant un bombage très profond dans la section transversale et/ou irrégulier sur la longueur du vitrage, ces dispositifs connus ne sont pas satisfaisants, soit du fait qu'ils ne fournissent pas une adhésion suffisante ou homogène, soit du fait qu'ils entrainent la rupture du vitrage.

Dans la publication de brevet US-A-3 054 344, on décrit un dispositif pour l'assemblage de vitrages feuilletés par pressage dans lequel les rouleaux de pressage sont montés sur des arbres articulés entre eux. Ce dispositif ne permet pas d'assembler des vitrages de formes complexes.

L'invention propose un dispositif pour l'assemblage par pressage des vitrages feuilletés symétriques ou asymétriques, capable d'opérer aussi bien sur des vitrages à double bombage peu accentué et régulier, que sur des vitrages à formes complexes pouvant présenter des bombages très accentués et/ou irréguliers. Par vitrages feuilletés symétriques, on entend selon l'invention des vitrages feuilletés dont les deux faces sont constituées de feuilles de verre. Par vitrages feuilletés asymétriques, on entend des vitrages feuilletés formés d'un support rigide monolithique ou feuilleté et d'une feuille souple en matière plastique ayant les propriétés désirées, par exemple les vitrages asymétriques décrits dans les publications de brevets français 2 398 606 et européens 0 132 198 et 0 131 523.

Le dispositif conformément à l'invention comprend un équipage mobile porteur d'au moins un ensemble de rouleaux de pressage s'étendant transversalement, divisé en sous-ensembles de rouleaux de pressage, chaque sous-ensemble étant monté sur une poutre dont la position peut être modifiée et réglée par rapport à la position des autres poutres, chaque rouleau de pressage étant rattaché à une poutre par un ensemble permettant le réglage de sa position. Par moyens de pressage, on entend ci-après les rouleaux ou galets et leur système de montage élastique ou pneumatique sur la poutre à laquelle ils sont rattachés.

Le nombre de sous-ensembles d'un ensemble de moyens de pressage est au moins égal à deux. Ce nombre peut varier selon la destination du dispositif.

Sous un aspect de l'invention les poutres portant chacune un sous-ensemble de moyens de pressage sont articulées entre-elles, au moins une d'entre-elles est tenue par une traverse horizontale faisant partie de même que l'ensemble de moyens de pressage d'un équipage mobile. Les poutres peuvent être réglées dans la position désirée par rapport à la traverse horizontale, soit à l'aide de vis, crémaillères ou autres systèmes mécaniques, soit à l'aide de vérins pneumatiques par exemple. Les poutres d'extrémités peuvent aussi être montées sur des articulations portées par les montants latéraux de l'équipage mobile. Le réglage de la position des poutres peut être ajusté en fonction du modèle de vitrage ou piloté par un automate ayant la forme du vitrage en mémoire.

Lorsque le dispositif selon l'invention est une calandreuse comprenant un ensemble de rouleaux supérieurs et un ensemble de rouleaux inférieurs, la division en sous-ensembles peut être réalisée pour l'ensemble de rouleaux supérieurs ou pour l'ensemble de rouleaux inférieurs ou bien pour les deux.

Dans une variante, le dispositif selon l'invention comprend un ensemble de rouleaux inférieurs de pressage, divisé en sous-ensembles et il comprend en tant que moyens de pressage supérieurs un rouleau presseur cylindrique souple s'étendant sur toute la largeur utile du dispositif, la courbure désirée du rouleau presseur étant fournie par l'action d'appui d'au moins une série de galets supérieurs, comme décrit par exemple dans la publication de brevet européen 0 015 209.

Dans une variante, le dispositif de pressage selon l'invention comprend en tant que moyens de pressage supérieurs un ensemble de rouleaux de pressage supérieur divisé conformément à l'invention en sous-ensembles de rouleaux, et un support de forme adaptée à la géométrie du vitrage en tant que moyens de pressage inférieurs, ce support pouvant être monté basculant autour d'un ou plusieurs axes horizontaux. Un dispositif de pressage utilisant un support de forme et décrit dans la demande de brevet français 87 15 624.

Dans cette variante, l'équipage mobile est formé de l'ensemble de rouleaux de pressage supérieurs et il est muni de moyens lui permettant de se déplacer selon la direction perpendiculaire à l'ensemble supérieur de pressage.

Comme décrit précédemment, un ensemble de pressage peut être divisé en deux, trois, ou plus de sous-ensembles.

Dans une réalisation où un ensemble est divisé en trois sous-ensembles, c'est-à-dire comportant trois poutres porteuses des rouleaux de pressage, celles-ci peuvent être disposées de façon symétrique. Ces trois poutres peuvent aussi être disposés de façon asymétrique. Cette dernière variante peut être préférée lorsque le dispositif est prévu pour l'assemblage de vitrages dont la courbure transversale est complexe.

Le nombre de rouleaux de pressage appartenant à chaque sous-ensemble peut varier d'un sous-ensemble à l'autre.

D'autres avantages et caractéristiques du dispositif selon l'invention apparaitront dans la suite de la description d'exemples de réalisations faite en référence aux figures.

La figure 1 A est une représentation en perspective d'un type de vitrage feuilleté, appelé par la suite vitrage A, de forme non developpable, qui présente un bombage dans le sens transversal sensiblement symétrique par rapport à l'axe longitudinal médian.

La figure 1 B est une représentation en perspective d'un autre type de vitrage feuilleté appelé par la suite vitrage B, de forme non développable, qui présente un bombage dans le sens transversal beaucoup plus accentué d'un côté de l'axe longitudinal médian que de l'autre.

La figure 2 est une représentation schématique en élévation, d'une réalisation d'un dispositif comprenant un ensemble supérieur de moyens de pressage et un ensemble inférieur de moyens de pressage divisés en sous-ensembles. Ce dispositif peut être utilisé pour l'assemblage par pressage de vitrages feuilletés dont les deux faces extérieures sont formées de feuilles rigides, telles des feuilles de verre. Sur cette figure, les ensembles supérieurs et inférieurs de moyens de pressage sont disposés de façon à presser un vitrage B selon le sens de passage indiqué par la flèche sur la figure 1 B.

La figure 3 A est une représentation schématique de la partie supérieure du dispositif représenté sur la figure 2, mais dans une autre configuration de réglage. Les moyens de pressage sont disposés de façon à presser un vitrage feuilleté plan.

La figure 3 B est une représentation schématique de la partie supérieure du dispositif représenté sur la figure 2 mais dans une autre configuration de réglage. Les moyens de pressage sont disposés de façon à presser un vitrage A selon le sens de passage indiqué par la flèche sur la figure 1 A.

La figure 4 est une représentation en élévation d'une réalisation d'un dispositif dans lequel l'ensemble supérieur de moyens de pressage et l'ensemble inférieur de moyens de pressage sont divisés chacun en 3 sous-ensembles, les deux sous-ensembles d'extrémité pouvant être montés symétriquement ou asymétriquement.

La figure 5 est une représentation schématique en élévation d'une réalisation d'un dispositif comprenant un ensemble inférieur de moyens de pressage divisé en sous-ensembles et un rouleau presseur supérieur souple.

La figure 6 est une représentation schématique en élévation d'une réalisation d'un dispositif comprenant un ensemble supérieur de moyens de pressage divisé en sous-ensembles et un support de forme comme moyens inférieurs de pressage.

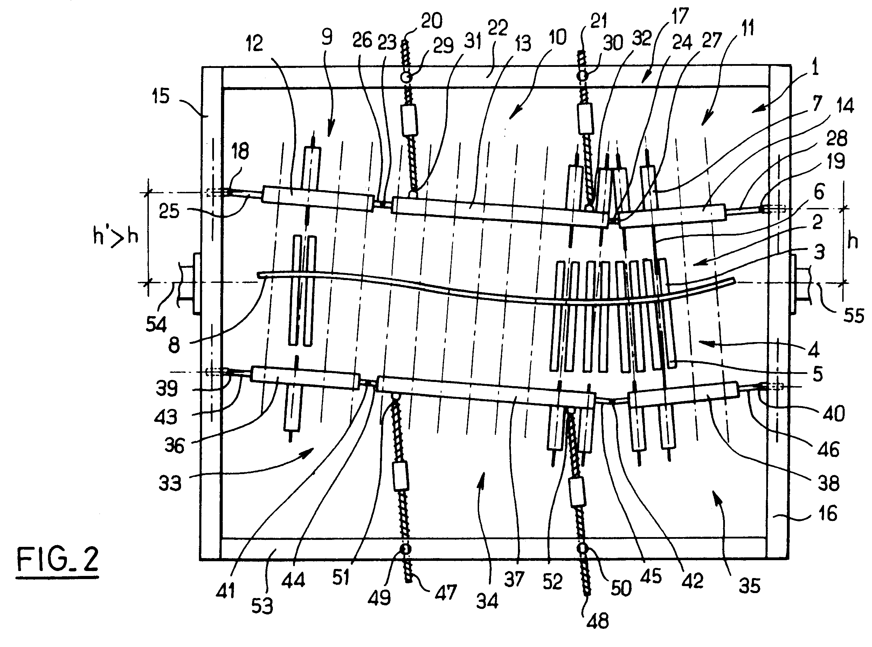

Le dispositif représenté sur la figure 2 comprend un équipage mobile 1 muni d'un ensemble 2 de rouleaux 3 supérieurs de pressage et d'un ensemble 4 de rouleaux 5 inférieurs de pressage (tous les rouleaux ne sont pas représentés). Chaque rouleau 3, 5 est monté par paire au bout d'une tige 6 faisant partie d'un ensemble de réglage 7 permettant de régler le positionnement du rouleau 3, 5 selon la courbure désirée pour la ligne de pressage pour le vitrage à presser 8, les rouleaux supérieurs 3 et les rouleaux inférieurs 5 étant appliqués sur le vitrage par des systèmes élastiques non représentés faisant partie des ensembles de réglage 7. Les rouleaux supérieurs 3 et leurs ensembles de réglage 7 sont répartis en trois sous-ensembles 9, 10, 11, portés chacun par une poutre 12, 13, 14. Les deux poutres d'extrémités 12 et 14 sont montées de façon articulée sur les deux montants 15, 16 d'un cadre 17 appartenant à l'équipage mobile 1. La position des articulations 18, 19 est réglable le long des montants verticaux 15, 16. La poutre centrale 13 est reliée aux poutres 12, 14 par des articulations 23, 24. Les articulations 18, 19, 23, 24 sont montées sur des systèmes coulissants 25, 26, 27, 28 s'emboitant aux extrémités des poutres 12, 13, 14. La poutre centrale 13 est supportée à l'aide de deux systèmes à vis 20, 21, par une traverse horizontale 22 reliant les deux montants 14, 16 pour former le cadre 17. Ces systèmes à vis peuvent pivoter autour d'axes horizontaux 29, 30 traversant la traverse 22 et autour d'axes 31, 32 sur la poutre 13.

Les rouleaux inférieurs 5 et leurs ensembles de réglage 7 sont de la même façon, répartis en trois sous-ensembles 33, 34, 35 portés chacun par une poutre 36, 37, 38. Les deux poutres d'extrémités 36, 38 sont montées de façon articulée sur les deux montants 15, 16 du cadre 17 appartenant à l'équipage mobile 1. La position des articulations 39, 40 est réglage le long des montants verticaux 15, 16. La poutre centrale 37 est reliée aux poutres 36, 38 par des articulations 91, 42. Les articulations 39, 40, 41, 42 sont montées sur des systèmes coulissants 43, 44, 45, 46 s'emboitant aux extrémités des poutres 36, 37, 38. La poutre centrale 37 est supportée à l'aide de deux systèmes à vis 47, 48, par une traverse horizontale 53 reliant les deux montants 15, 16 pour former la cadre 17. Ces systèmes à vis peuvent pivoter autour d'axes horizontaux 49, 50 traversant la traverse 53 et autour d'axes 51, 52 fixés sous le poutre 37.

L'ensemble 4 de rouleaux inférieurs de pressage comprend au moins deux rouleaux moteur reliés par un système de transmission à un moteur électrique non représenté.

Le cadre 17 et l'équipage mobile 1 sont montés pivotants autour de deux arbres horizontaux 54, 55, alignés, s'emmenchant d'un côté dans les deux montants 15, 16 et portés de l'autre par des paliers appartenant au bâti du dispositif (non représentés).

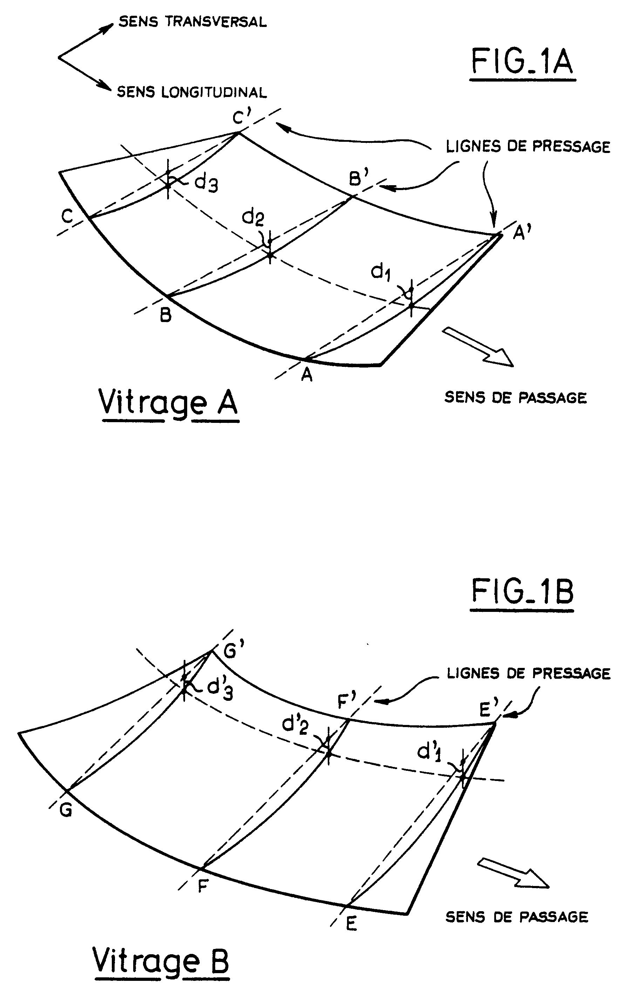

Le dispositif ci-dessus permet notamment l'assemblage de vitrages feuilletés plans ou bombés. Les vitrages bombés peuvent présenter comme représentés sur les figures 1A et 1B, un bombage dans le sens transversal, accentué symétriquement ou non par rapport à l'axe longitudinal médian du vitrage. Pour passer d'un type de vitrage à un autre, par exemple, pour passer du pressage d'un vitrage présentant un certain bombage transversal, au pressage d'un vitrage présentant un bombage transversal très différent (par exemple du vitrage A au vitrage B), il suffit de modifier la disposition des sous-ensembles de pressage supérieurs 9, 10, 11 et inférieur 33, 34, 35, sans modifier la disposition des ensembles de réglage 7, les uns par rapport aux autres, ou par rapport à la poutre sur lesquels ils sont montés.

Le dispositif fonctionne de la façon suivante : on dispose les deux sous-ensembles de pressage supérieurs et inférieurs selon une forme générale proche de celle du vitrage à presser, par exemple, en forme de U si l'on doit presser un vitrage de type A, en forme de V décalé, si l'on doit presser un vitrage de type B ou de façon alignée et horizontale si l'on doit presser un vitrage plan. Les sous-ensembles de pressage supérieurs 9, 10, 11 doivent être disposés parallèlement aux sous-ensembles de pressage inférieurs 33, 34, 35 et à une distance telle les uns des autres que, d'une part, le vitrage à presser 8 soit situé sensiblement au niveau des arbres de pivotement 54, 55 de l'équipage mobile 1, et d'autre part, les rouleaux de pressage supérieurs 3 et inférieurs 5 appuient sur le vitrage 8 avec la pression désirée. Cette disposition est obtenue aisément en agissant sur les systèmes à vis 20, 21, 48, 49 qui déterminent la distance par rapport aux traverses horizontales 22 et 53 des poutres centrales 13 et 37 respectivement, et éventuellement en modifiant la distance entre les articulations 18, 39 et/ou 19, 40, situées aux extrémités, par rapport aux arbres 54 et 55. En outre, pour maintenir face à face et à la distance désirée les uns des autres, les rouleaux de pressage supérieurs 3 et les rouleaux de pressage inférieurs 5 on pourra agir sur les systèmes coulissant 25, 26, 27, 28 d'une part et 43, 44, 45, 46 d'autre part, pour rapprocher ou éloigner les poutres 12, 13, 14 et 36, 37, 38 respectivement les unes des autres.

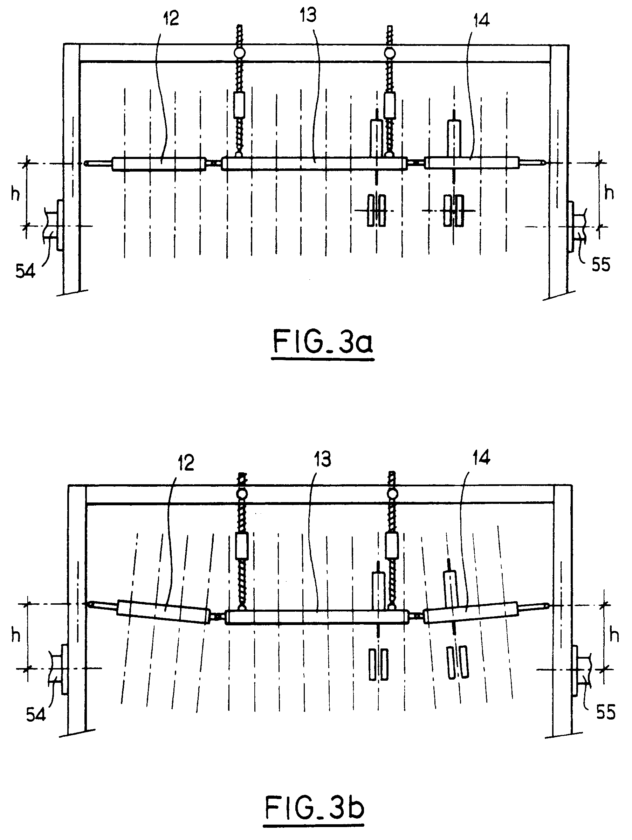

La figure 2 et les figures 3A et 3B montrent trois exemples de réglage possible sur ce dispositif. Le dispositif représenté figure 2 est montré, réglé pour un vitrage B. Les poutres 12, 13 et 36, 37 sont respectivement alignées Les poutres 14 et 38 sont inclinées de 10° environ par rapport aux précédentes, l'articulation 18 est positionnée à une distance h' de l'arbre 54, légèrement supérieure à la distance h séparant l'articulation 19 et l'arbre 55. Le vitrage 8 est correctement pressé car tous les rouleaux de pressage sont convenablement inclinés par rapport au vitrage.

Le même dispositif est représenté en position réglée, figure 3A, pour un vitrage plan. Toutes les poutres sont disposées horizontalement.

Le même dispositif est représenté en position réglée, figure 3B, pour un vitrage A, la poutre 13 est disposée horizontalement. Les poutres 12, 14 sont inclinées d'environ 6° par rapport à la poutre 13.

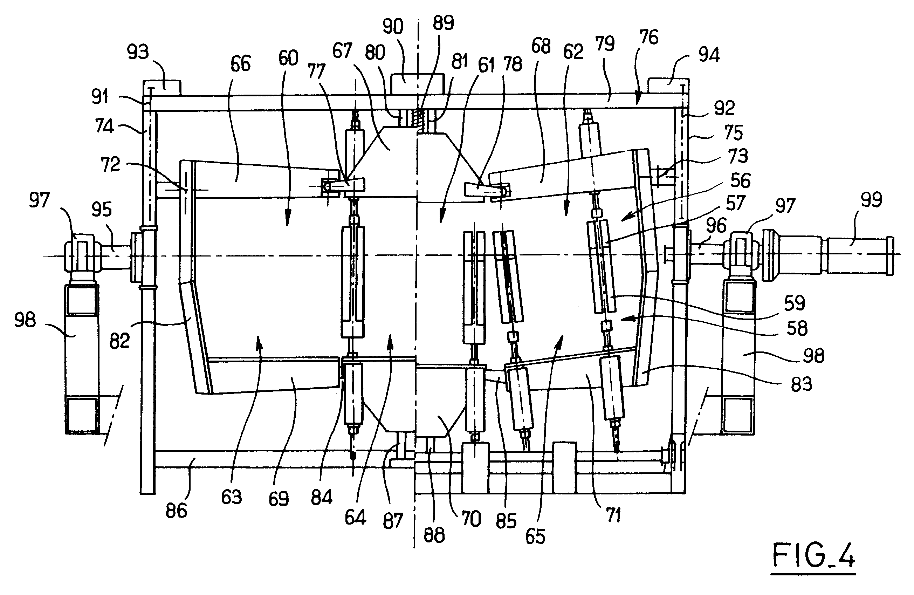

Le dispositif représenté sur la figure 4 est équipé d'un ensemble supérieur 56 de rouleaux de pressage 57 (tous les rouleaux ne sont pas représentés) et d'un ensemble inférieur 58 de rouleaux de pressage 59, divisé l'un et l'autre en 3 sous-ensembles 60, 61, 62, 63, 64, 65. Chaque sous-ensemble est porté par une poutre 66, 67, 68, 69, 70, 71.

Les deux poutres d'extrémités supérieures 66, 68 sont montées articulées autour d'axes horizontaux 72, 73 montés eux-mêmes de façon réglable sur les deux montants 74, 75 du cadre 76 et elles sont reliées également par des articulations 77, 78 à la poutre centrale supérieure 67.

La poutre centrale supérieure 67 est supportée de façon réglable par une traverse supérieure 79 reliant les deux montants 74, 75 du cadre 76. Cette poutre centrale 67 est montée coulissante le long de deux colonnes verticales 80, 81 supportées par la traverse 79. Ce montage autorise un débattement vertical de la poutre 67 qui reste horizontale.

Les deux poutres d'extrémités supérieures 66, 68 sont solidaires des deux poutres d'extrémités inférieures 69, 71 de sorte que les deux poutres 66, 69 situées d'un même côté du dispositif forment un U 82, et que les deux autres poutres 68, 71 situées de l'autre côté forment un U 83.

Les deux poutres inférieures d'extrémités 69, 71 sont de la même façon que les poutres supérieures d'extrémités 66, 68, reliées par des articulations 84, 85 à la poutre centrale inférieure 70, Cette poutre centrale inférieure 70 est liée de façon réglable à une traverse inférieure 86 appartenant au cadre mobile. Cette poutre centrale inférieure 70 est également montée coulissante le long de deux colonnes 87, 88 verticales portées par la traverse inférieure 86.

La position de la poutre centrale supérieure 67, par rapport à la traverse supérieure 79 est donnée par une vis sans fin 89 commandée par un système motorisé 90.

De la même façon, la position des deux axes d'articulation 72, 73, par rapport à la traverse supérieure 79 est donnée par des vis sans fin 91, 92 commandées par des systèmes motorisés 93, 94 montés sur la traverse 79.

Par le choix des libertés des différents systèmes de guidage entre poutres et de débattement vertical pour les poutres centrales, on peut obtenir une disposition symétrique pour les poutres ou bien une disposition asymétrique.

Le cadre mobile est monté pivotant sur des arbres horizontaux 95, 96 liés aux deux montants du cadre, et portés par des paliers 97 montés sur deux colonnes verticales 98.

L'ensemble inférieur 58 de rouleaux de pressage comprend au moins deux rouleaux moteurs reliés par un système de transmission à un moteur électrique 99.

Le dispositif représenté fig. 4 peut être piloté par un automate ayant la forme du vitrage en mémoire. L'automate pilote les systèmes motorisés 90, 93, 94 qui commande respectivement la position de la poutre centrale supérieure 67 et des articulations 72 et 73 par rapport à la traverse supérieure 79.

Le dispositif fonctionne de la façon suivante. Dans le cas d'un vitrage, de forme peu complexe, par exemple un vitrage A dont le bombage transversal est régulier et sensiblement le même sur toute la longueur du vitrage, c'est à dire sur la figure 1A, d1, d2 et d3 sont sensiblement de même valeur, l'automate détermine et règle la position appropriée de la poutre centrale 67 et des articulations 72 et 73 sur la base de la courbure moyenne du vitrage, de telle sorte que les rouleaux de pressage 57 et 59 soient correctement orientés par rapport au plan du vitrage et de telle sorte que le vitrage reste sensiblement au niveau de l'axe de pivotement du cadre mobile 76. De cette façon, des vitrages présentant des bombages, accentués mais réguliers, peuvent être correctement pressés. Naturellement, on peut aussi presser de la même façon des vitrages B, des vitrages peu bombés ou même plans.

Dans le cas d'un vitrage de forme très complexe, qui présente des valeurs de bombage transversal très variables sur la longueur du vitrage, par exemple un vitrage A très creux dans les zones de tête et plus plat dans la zone centrale (figure 1A), l'automate détermine et règle, zone par zone, voire sections par sections, la position des articulations 72, 73, et/ou de la poutre centrale 67, au fur et à mesure que le vitrage avance entre les rouleaux de pressage.

Dans ce cas, l'automate possède la forme du vitrage en mémoire ou utilise des relevés de profondeurs de bombage effectués sur le vitrage, préalablement au pressage, par exemple à l'aide de capteurs appropriés.

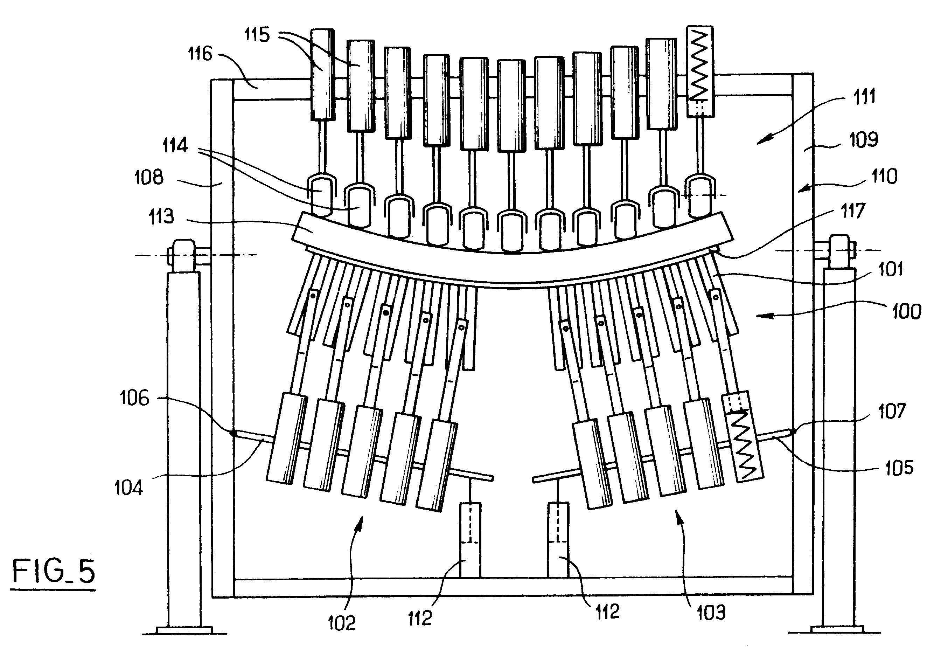

Le dispositif représenté sur la figure 5 comprend un ensemble inférieur 100 de rouleaux de pressage 101 répartis en deux sous-ensembles 102, 103, chaque sous-ensemble 102, 103 étant porté par une poutre articulée 104, 105 autour d'un axe horizontal 106, 107, porté par un des deux montants 108, 109 du cadre pivotant 110, de l'équipage mobile 111 et supportée par l'extrémité de la tige d'un vérin 112. Les moyens de pressage supérieurs sont ici constitués d'un rouleau presseur souple 113 s'étendant sur toute la largeur utile du dispositif, cintré sous l'action de galets supérieurs 114 dont la position est réglée par leurs ensembles de montage 115 portés par une traverse supérieure 116 reliant les deux montants 108, 109 du cadre pivotant 110. Des rouleaux d'appui non représentés peuvent venir s'appliquer en amont et en aval du rouleau presseur et l'empêcher de l'échapper de l'action des galets supérieurs presseurs.

Ce dispositif peut être utilisé pour l'assemblage par calandrage d'un vitrage 117 formé d'un support rigide et d'une feuille de matière plastique souple, par exemple.

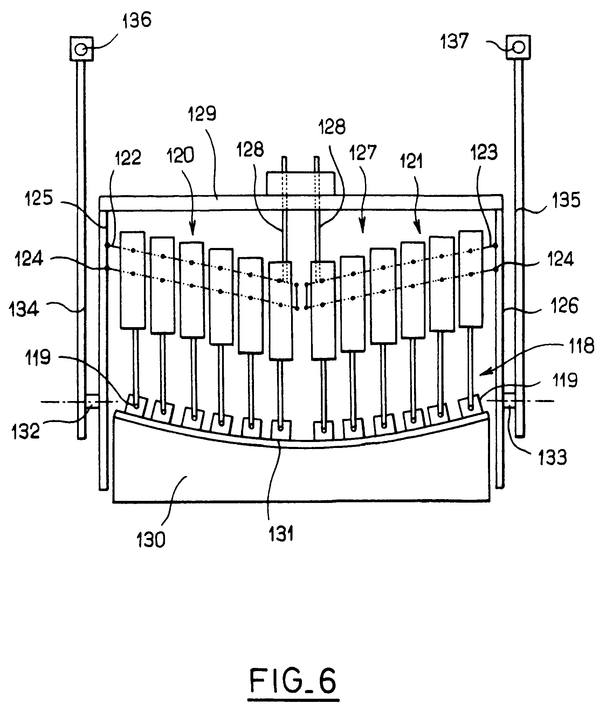

Le dispositif représenté schématiquement sur la figure 6 comprend un ensemble 118 de rouleaux de pressage supérieurs 119 répartis en deux sous-ensembles 120, 121 montés sur deux poutres articulées 122, 123, autour d'axes horizontaux 124 portés par les montants 125, 126 d'un équipage mobile 127 et supportés par l'intermédiaire de vis de réglage 128 à une traverse supérieure 129 reliant les deux montants verticaux 125, 126. La partie inférieure du dispositif est formée d'un support 130 qui épouse la forme du vitrage 131 à assembler. Les deux montants verticaux 125, 126 peuvent pivoter autour de deux axes horizontaux 132, 133 portés par deux bras 134, 135 montés coulissant selon un mouvement horizontal le long de deux rails horizontaux 136, 137 s'étendant perpendiculairement à l'ensemble 118 des rouleaux de pressage inférieurs.

## Revendications

1. Dispositif pour l'assemblage par pressage d'un vitrage feuilleté, comprenant un équipage mobile (1) porteur d'au moins un ensemble (2, 4) de rouleaux de pressage (3, 5), l'ensemble (2, 4) de rouleaux de pressage étant divisé en au moins deux sous-ensembles (9, 10, 11, 33, 34, 35) de rouleaux de pressage, chaque sous-ensemble étant monté sur une poutre (12, 13, 14, 36, 37, 38), caractérisé en ce que la position de la poutre peut être modifiée et réglée par rapport à la position des autres poutres, chaque rouleau de pressage (3, 5) étant rattaché à une poutre par un ensemble (7) permettant le réglage de sa position.

2. Dispositif selon la revendication 1, caractérisé en ce que toutes les poutres sont articulées entre-elles.

3. Dispositif selon la revendication 1 ou 2, caractérisé en ce que chaque poutre extérieure est montée articulée par rapport à un cadre (17) appartenant à l'équipage mobile (1).

4. Dispositif selon une des revendications 1 à 3, caractérisé en ce que au moins une poutre est supportée par une traverse appartenant au même équipage mobile que l'ensemble de rouleaux de pressage divisé en sous-ensembles.

5. Dispositif selon une des revendications 1 à 4, caractérisé en ce qu'il comprend un second ensemble de rouleaux de pressage divisé en autant de sous-ensembles que le premier.

6. Dispositif selon la revendication 5, caractérisé en ce que chaque ensemble est divisé en trois sous-ensembles, chacun d'eux étant supporté par une poutre, les trois poutres étaient montées articulées entre-elles.

7. Dispositif selon la revendication 6, caractérisé en ce que les deux ensembles de rouleaux de pressage sont un ensemble supérieur et un ensemble inférieur, respectivement, et que les deux poutres d'extrémités supérieures sont solidaires des deux poutres d'extrémités inférieures et forment, prises deux à deux, un U incliné.

8. Dispositif selon la revendication 7, caractérisé en ce que les poutres centrales sont montées coulissantes verticalement.

9. Dispositif selon une des revendications 1 à 4, caractérisé en ce que l'ensemble de rouleaux de pressage divisé en sous-ensembles est un ensemble inférieur et en ce que les moyens de pressage supérieurs comprennent un rouleau souple cintré (113) sous l'action de galets supérieurs (114).

10. Dispositif selon une des revendications 1 à 4, caractérisé en ce que l'ensemble de rouleaux de pressage divisé en sous-ensembles est un ensemble supérieur et en ce que le dispositif comprend un support (130) de forme adaptée à la géométrie du vitrage en tant que moyens de pressage inférieurs.

11. Dispositif selon une des revendications 4 à 10, caractérisé en ce que la position des poutres, par rapport à la traverse qui les supporte, peut être réglée à l'aide de vis.

12. Dispositif selon une des revendications 1 à 11, caractérisé en ce que les poutres sont montées autour d'articulations (39, 40, 41, 42), elles-mêmes montées sur des systèmes coulissants (43, 44, 45, 46).

13. Dispositif selon une des revendications 1 à 12, caractérisé en ce que le réglage de la position des poutres est piloté par un automate ayant la forme du vitrage en mémoire.

## Claims

1. Device for assembling by pressing a laminated pane, comprising a movable equipment unit (1) carrying at least one assembly (2, 4) of pressing rollers (3, 5), the assembly (2, 4) of pressing rollers being divided into at least two sub-assemblies (9, 10, 11, 33, 34, 35) of pressing rollers, each sub-assembly being mounted on a beam (12, 13, 14, 36, 37, 38), characterized in that the position of the beam may be modified and adjusted with respect to the position of the other beams, each pressing roller (3, 5) being attached to a beam by an assembly (7) enabling its position to be adjusted.

2. Device according to Claim 1, characterized in that all the beams are articulated amongst themselves.

3. Device according to Claim 1 or 2, characterized in that each external beam is mounted articulated relative to a frame (17) forming part of the movable equipment unit (1).

4. Device according to one of Claims 1 to 3, characterized in that at least one beam is supported by a cross-member forming part of the same movable equipment unit as the assembly of pressing rollers divided into sub-assemblies.

5. Device according to one of Claims 1 to 4, characterized in that it comprises a second assembly of pressing rollers divided into the same number of sub-assemblies as the first.

6. Device according to Claim 5, characterized in that each assembly is divided into three sub-assemblies, each of them being supported by one beam, the three beams being mounted articulated to one another.

7. Device according to Claim 6, characterized in that the two assemblies of pressing rollers are an upper assembly and a lower assembly, respectively, and that the two upper end beams are fixed to the two lower end beams and form, considered in pairs, an inclined U.

8. Device according to Claim 7, characterized in that the central beams are mounted vertically slidable.

9. Device according to one of Claims 1 to 4, characterized in that the assembly of pressing rollers divided into sub-assemblies is a lower assembly and in that the upper pressing means comprise a flexible roller (113) curved under the action of upper wheels (114).

10. Device according to one of Claims 1 to 4, characterized in that the assembly of pressing rollers divided into sub-assemblies is an upper assembly and in that the device comprises a support (130) of shape adapted to the geometry of the pane as lower pressing means.

11. Device according to one of Claims 4 to 10, characterized in that the position of the beams, with respect to the cross-member which supports them, can be adjusted by means of screws.

12. Device according to one of Claims 1 to 11, characterized in that the beams are mounted about articulations (39, 40, 41, 42), themselves mounted on sliding systems (43, 44, 45, 46).

13. Device according to one of Claims 1 to 12, characterized in that the adjustment of the position of the beams is governed by an automatic controller having the form of the beam in its memory.

## Patentansprüche

1. Vorrichtung zur Herstellung von Verbundglas durch Druck, umfassend eine bewegliche Einrichtung (1), die mindestens eine Einheit (2, 4) von Druckwalzen (3, 5) trägt, wobei die Einheit (2, 4) von Druckwalzen in mindestens zwei Untereinheiten (9, 10, 11, 33, 34, 35) von Druckwalzen unterteilt ist, von denen jede Untereinheit auf einem Walzenträger (12, 13, 14, 36, 37, 38) vorgesehen ist, **dadurch gekennzeichnet, daß** die Stellung des Walzenträgers verändert und geregelt werden kann in Abhängigkeit der Stellung der anderen Walzenträger, wobei jede Druckwalze (3, 5) mit einem Träger durch eine Einrichtung (7) verbunden ist, die eine Regelung ihrer Stellung erlaubt.

2. Vorrichtung nach Anspruch 1, **dadurch gekennzeichnet, daß** alle Walzenträger untereinander gelenkig verbunden sind.

3. Vorrichtung nach Anspruch 1 oder 2, **dadurch gekennzeichnet, daß** jeder äußere Walzenträger gelenkig mit einem Rahmen (17) verbunden ist, welcher zur beweglichen Einrichtung (1) gehört.

4. Vorrichtung nach einem der Ansprüche 1 bis 3, **dadurch gekennzeichnet, daß** mindestens ein Walzenträger durch eine Traverse gestützt wird, die zur gleichen beweglichen Einrichtung gehört, wie die Einheit der Druckwalzen, welche in Untereinheiten unterteilt ist.

5. Vorrichtung nach einem der Ansprüche 1 bis 4, **dadurch gekennzeichnet, daß** sie eine zweite Einheit von Druckwalzen umfaßt, die ebenso in Untereinheiten unterteilt ist, wie die erste.

6. Vorrichtung nach Anspruch 5, **dadurch gekennzeichnet, daß** die Einheit in drei Untereinheiten unterteilt ist, wobei jede durch einen Walzenträger gestützt wird, und wobei die drei Walzenträger untereinander gelenkig verbunden sind.

7. Vorrichtung nach Anspruch 6, **dadurch gekennzeichnet, daß** die beiden Einheiten von Druckwalzen eine obere und eine untere Einheit jeweils darstellen, und daß die beiden äußeren oberen Walzenträger fest mit den beiden äußeren unteren Walzenträgern verbunden sind und zwei-zu-zwei genommen ein geneigtes U bilden.

8. Vorrichtung nach Anspruch 7, **dadurch gekennzeichnet, daß** die zentralen Walzenträger vertikal beweglich vorgesehen sind.

9. Vorrichtung nach Anspruch 1 bis 4, **dadurch gekennzeichnet, daß** die Einheit der Druckwalzen, die in Untereinheiten unterteilt ist, eine untere Einheit darstellt und daß die oberen Druckmittel eine biegsame Walze (113) umfassen, die durch die Wirkung der oberen Walzen (114) gekrümmt wird.

10. Vorrichtung nach einem der Ansprüche 1 bis 4, **dadurch gekennzeichnet, daß** die Einheit der Druckwalzen, die in Untereinheiten unterteilt ist, eine obere Einheit ist und daß die Vorrichtung ein Gestell (130) umfaßt, dessen Form an die Geometrie der Verglasung angepaßt ist, als unteres Druckmittel.

11. Vorrichtung nach Anspruch 4 bis 10, **dadurch gekennzeichnet, daß** die Stellung der Walzenträger in Bezug auf die Traverse, die sie stützt, mit Schraubenmittel geregelt werden kann.

12. Vorrichtung nach Ansprüch 1 bis 11, **dadurch gekennzeichnet, daß** die Walzenträger um die Gelenkverbindungen (39, 40, 41, 42) vorgesehen sind, welche ihrerseits auf Laufsystemen (43, 44, 45, 46) angebracht sind.

13. Vorrichtung nach Anspruch 1 bis 12, **dadurch gekennzeichnet, daß** die Regelung der Stellung der Walzenträger durch einen Automaten gesteuert wird, der die Form der Verglasung gespeichert hat.
